# EUROPÄISCHE PATENTSCHRIFT

(11) **EP 1 319 806 B1**
(45) Veröffentlichungstag und Bekanntmachung des Hinweises auf die Patenterteilung: **13.05.2009**
(21) Anmeldenummer: 02022038.0
(22) Anmeldetag: 01.10.2002
(51) Int. Cl.: F01D 17/10, F16K 3/00, F02C 9/18

(54) **Vorrichtung zur Luftmassenstromregelung**
Air flow regulating device
Dispositif de régulation de débit d'air

(30) Priorität: 12.12.2001 DE 10160996
(43) Veröffentlichungstag der Anmeldung: 18.06.2003
(73) Patentinhaber: Rolls-Royce Deutschland Ltd & Co KG, 15827 Dahlewitz (DE)
(72) Erfinder: Friedl, Winfried-Hagen, 12305 Berlin (DE); Au, Jörg, 12307 Berlin (DE)
(74) Vertreter: Weber, Joachim

(56) Entgegenhaltungen:
- BE-A- 661 372
- GB-A- 2 136 058
- US-A- 2 940 258
- US-A- 4 785 624
- US-A- 5 993 149

## Beschreibung

Die Erfindung bezieht sich auf eine Vorrichtung zur Luftmassenstromregelung.

Aus dem Stand der Technik ist es bekannt Luftsysteme, insbesondere Kühlluftsysteme für Gasturbinen, vorzusehen. Diese werden, insbesondere zu Kühlzwecken im heißen Bereich des Triebwerks, so dimensioniert bzw. ausgelegt, dass auch bei ungünstigsten Betriebsbedingungen, wie beispielsweise bei maxi-maler Leistung und damit verbundenen höchsten Temperaturbereichen, eine ausreichende Kühlung stattfindet.

Viele der Luftsysteme sind nicht adaptiv ausgeführt, so dass sich bei einem Teillastbetrieb oder bei Betriebsbedingungen, in denen eine geringere Kühlung erforderlich ist, ein zu grosser Luftmassenstrom und damit eine Überkühlung ergibt. Das Ergebnis ist, dass der Turbine eine größere Luftmasse zugeführt wird als eigentlich benötigt werden würde.

Hierdurch ergibt sich der Nachteil, dass der Wirkungsgrad der Gasturbine sinkt, da aus dem Kompressor eine zu große Kühlluftmasse abgeführt wird. Durch den verschlechterten Wirkungsgrad ergibt sich ein höherer spezifischer Treibstoffverbrauch, welcher einerseits zu höheren Kosten führt und andererseits die Reichweite des Fluggeräts einschränkt.

Aus dem Stand der Technik sind Konstruktionen bekannt, bei welchen mittels eines separat zu steuernden oder zu regelnden Betätigungselements Ventilelemente, Klappen oder Ähnliches in den jeweiligen Luftkanälen geöffnet oder geschlossen werden können. Hierbei ist beispielsweise auf die US-Patente 4,462,204 und 4,807,433 sowie das US-Patent 6,202,403 zu verweisen. Diese Konstruktionen sind sowohl herstellungstechnisch sehr aufwendig als auch hinsichtlich ihres Betriebes anspruchsvoll, da entsprechende Steuerungen oder Regelungen vorgesehen sein müssen.

Die US-A-2 940 258 zeigt ein Absperrelement zur Zuführung von Luft zu Komponenten von Gasturbinen. Dabei ist ein druckgesteuertes Absperrorgan vorgesehen.

Die GB-A-2 136 058 beschreibt eine Konstruktion, bei welcher ein Turbolader mit einer Bypass-Passage versehen ist, die über den Druck im Einlasskanal gesteuert wird. Somit beeinflusst der Druck im Einströmkanal die Bypass-Strömung des Turboladers.

Die BE-A-66 1372 zeigt die Betätigung eines Verteilventils mittels eines hydraulischen Motors, um einen Gasstrom aufzuteilen.

Die US-A-4 785 624 betrifft eine Kulissenkonstruktion zur Luftführung einer Gasturbine.

Der Erfindung liegt die Aufgabe zugrunde, eine Vorrichtung zur Luftmassenstromregelung zu schaffen, welche bei einfachem Aufbau und einfacher, betriebssicherer Wirksamkeit selbsttätig regelnd ist und eine automatische Anpassung der Kühlluftmassenströme ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Im Rahmen der Erfindung ist somit vorgesehen, dass die Vorrichtung zur Luftmassenstromregelung zumindest einen Zuführkanal aufweist, welcher in einen Luftkanal oder Ähnliches mündet. Weiterhin ist stromab der Mündung des Zuführkanals ein von dem Luftkanal abzweigender Gegendruckkanal vorgesehen.

Die Erfindung umfasst weiterhin ein doppelt wirkendes Absperrelement, welches mit dem Gegendruckkanal und dem Zuführkanal verbunden ist und mit Mitteln zur Durchflussregelung in dem Zuführkanal versehen ist.

Die erfindungsgemäße Vorrichtung zeichnet sich durch eine Reihe erheblicher Vorteile aus.

Durch die adaptive, selbstregelnde Konstruktion der Vorrichtung ist gewährleistet, dass sich diese automatisch an die jeweiligen Betriebspunkte oder Betriebszustände der Gasturbine anpasst. Es werden somit jeweils nur die Kühlluftmassenströme zugeführt, die aktuell benötigt werden. Hierdurch wird vermieden, dass von dem Kompressor eine unnötig große Luftmasse abgeleitet wird. Die Folge wiederum ist, dass der gesamte Wirkungsgrad der Gasturbine steigt und sich, beispielsweise im Reiseflug, dementsprechend der Treibstoffverbrauch reduziert.

Die erfindungsgemäße Lösung nutzt somit die im Triebwerk auftretenden und vom jeweiligen Betriebspunkt abhängigen Druckdifferenzen, um das Absperrelement zu steuern bzw. zu regeln. Erfindungsgemäß ist somit eine sehr einfache mechanische Regelung vorgesehen, die auf zusätzliche elektronische Überwachungseinrichtungen bzw. Steuer-/Regelungseinrichtungen gänzlich verzichten kann.

In besonders vorteilhafter Ausgestaltung der Erfindung ist vorgesehen, dass das Absperrelement eine doppelt wirkende Kolben-Zylinder-Einheit umfasst. Es wird somit ein druckgesteuertes Dosier-Ventil verwendet, welches in sehr einfacher und betriebssicherer Weise ausgestaltet und aufgebaut sein kann. Mittels derartiger Absperrelemente lassen sich einzelne Bauteile einer Gasturbine separat mit Kühlluft versorgen.

Die gesamte Konstruktion kann sehr einfach und kostengünstig hergestellt werden und ist wenig wartungsintensiv.

Besonders günstig ist es, wenn der Kolben selbst die Mittel zur Durchflussregelung umfasst. Zusätzliche Absperrelemente oder Ähnliches sind bei dieser Ausgestaltung nicht erforderlich. Vielmehr kann in günstiger Ausgestaltung der Kolben selbst als Absperrelement in den Strömungsquerschnitt des Zuführkanals eingebracht werden, um dessen Querschnitt und damit die Luftmasse zu regeln.

In einer alternativen Ausgestaltung bzw. in Weiterbildung der Erfindung kann auch vorgesehen sein, dass die Mittel zur Durchflussregelung mehrere Zuführkanäle regeln bzw. steuern.

Hierzu kann es günstig sein, beispielsweise ein Kulissenelement, ein Ringelement oder Ähnliches vorzusehen, welches gleichzeitig mehrere Kühlluftkanäle steuert oder regelt.

Die erfindungsgemäße Vorrichtung ist sowohl für eine stufenlose Regelung als auch für eine gestufte Regelung der Kühlluftmassenströme einsetzbar, da die sich ändernden auftretenden Druckdifferenzen als Regelgröße eingesetzt werden.

Es handelt sich erfindungsgemäß somit um ein autonomes Regel-/ Steuerungssystem, welches keine Betätigung von außen oder Ähnliches benötigt.

Im Hinblick auf das technische Grundprinzip ist die Höhe der Druckdifferenz nicht entscheidend für die Funktionsfähigkeit der Vorrichtung.

Insgesamt ergibt sich somit durch die Reduzierung der Kühlluftmassenströme eine Erhöhung des Wirkungsgrades der Gasturbine. Dies resultiert in geringeren Treibstoffkosten und damit der Möglichkeit, längere Flugmissionen durchzuführen.

Im Folgenden wird die Erfindung anhand von Ausführungsbeispielen in Verbindung mit der Zeichnung beschrieben. Dabei zeigt:
- Fig. 1: eine schematische Teil-Schnittansicht eines Teilbereichs einer erfindungsgemäßen Gasturbine,
- Fig. 2: eine stark vereinfachte Darstellung eines ersten Ausführungsbeispiels der erfindungsgemäßen Vorrichtung in einem Regelzustand mit hohen Druckdifferenzen,
- Fig. 3: eine Darstellung analog Fig. 2 mit niedrigen Druckdifferenzen,
- Fig. 4: eine vereinfachte Darstellung eines weiteren Ausführungsbeispiels im Ausgangszustand, und
- Fig. 5: eine Darstellung, analog Fig. 4, in einem Zustand mit reduzierten Luftmassenströmen.

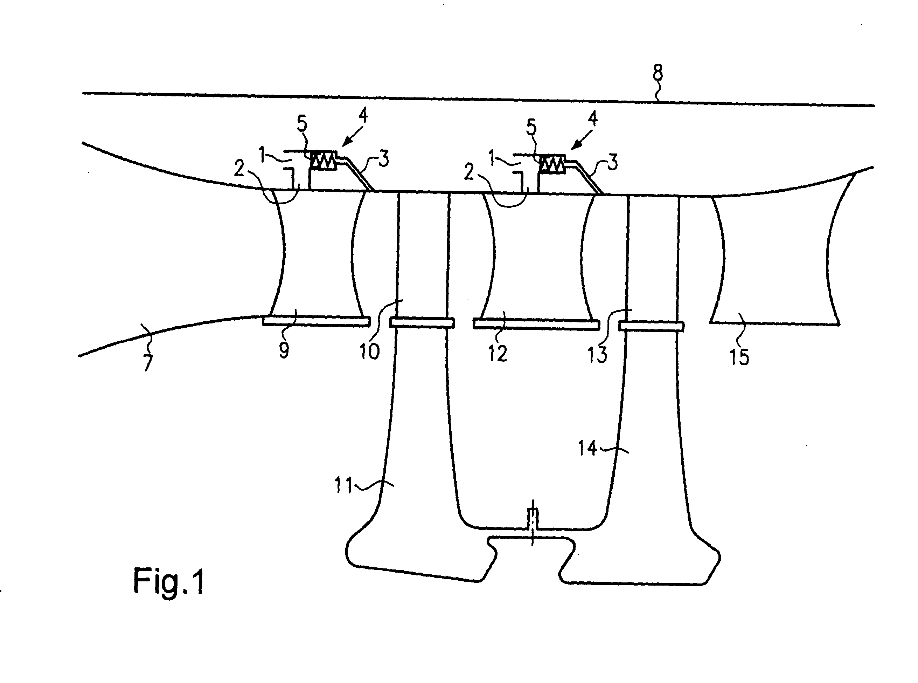

Fig. 1 zeigt in stark vereinfachter Darstellung in der Seitenansicht einen Teilbereich einer Fluggasturbine. Hierbei ist eine Brennkammer mit dem Bezugszeichen 7 versehen. Eine nachfolgende Turbine weist ein Turbinengehäuse 8 auf, in welchem Leitschaufeln 9 einer ersten Stufe sowie Laufschaufeln 10 der ersten Stufe dargestellt sind. Die Laufschaufeln 10 sind in üblicher Weise an einer Scheibe 11 der ersten Stufe befestigt. In Strömungsrichtung folgend ist eine Leitschaufel 12 einer zweiten Stufe dargestellt, welcher eine Laufschaufel 13 der zweiten Stufe zugeordnet ist, welche wiederum an einer Scheibe 14 der zweiten Stufe befestigt ist. Mit dem Bezugszeichen 15 ist eine Turbinenaustrittsleitschaufel dargestellt.

Weiterhin zeigt die Fig. 1 jeweils in stark vereinfachter Form eine Kolben-Zylinder-Einheit 4, welche Teil eines erfindungsgemäßen Ausführungsbeispiels der Vorrichtung zur Luftmassenstromregelung ist. Die Kolben-Zylinder-Einheit 4 ist im Bereich eines Zuführkanals 1 angeordnet, von welchem ein Luftkanal 2 abzweigt. Der Luftkanal 2 dient zur Kühlung der Leitschaufeln 9 bzw. 12.

Stromab ist ein Gegendruckkanal 3 ausgebildet, welcher den rückseitigen Bereich des Kolbens 5 der Kolben-Zylinder-Einheit 4 mit Druck beaufschlagt.

Die Kolben-Zylinder-Einheit 4 umfasst weiterhin eine Feder 16, welche eine ausreichende Vorspannung auf den Kolben 5 aufbringt.

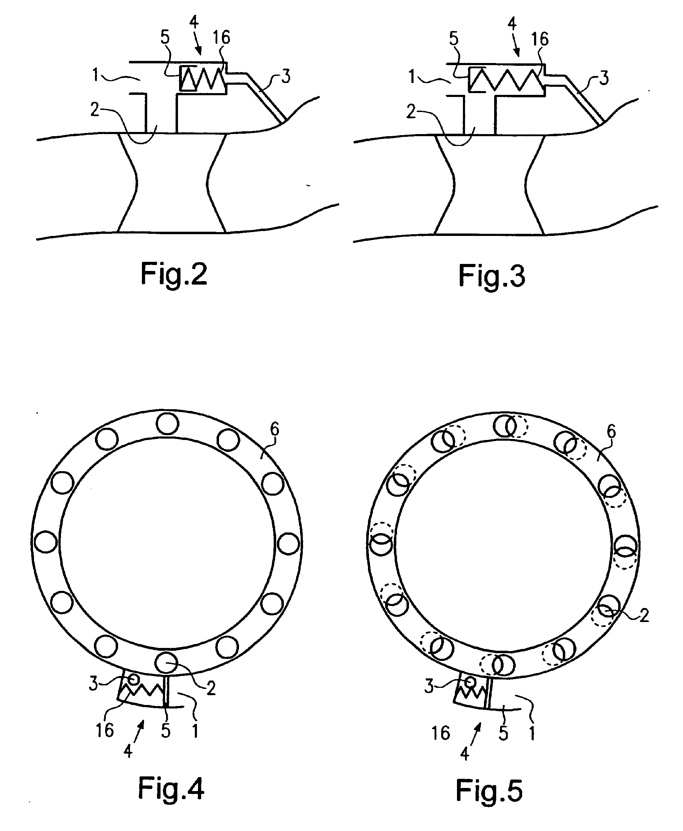

Die Funktionsweise ist in den Fig. 2 und 3 verdeutlicht. Die Fig. 2 zeigt einen Zustand mit großer Druckdifferenz. In diesem Zustand ist die Druckkraft in dem Zuführkanal 1 größer als die Summe aus der Druckkraft im Gegendruckkanal und der Vorspannkraft der Feder 16. Der Kolben 5 wird somit verschoben, um den Strömungsquerschnitt des Zuführkanals 1 bzw. des von diesem abzweigenden Luftkanals 2 freizugeben. Demgegenüber zeigt die Fig. 3 einen Betriebszustand einer kleinen Druckdifferenz. Diese bewirkt, dass die Druckkraft im Gegendruckkanal 3 zusammen mit der Vorspannkraft der Feder 16 größer ist als die Druckkraft im Zuführkanal 1, so dass der Kolben 5 teilweise den freien Querschnitt des Zuführkanals 1 bzw. des Luftkanals 2 abdeckt und so zu einer geringeren Luftzufuhr führt.

Die Fig. 4 und 5 zeigen ein weiteres Ausführungsbeispiel, bei welchem jedenfalls eine Kolben-Zylinder-Einheit 4 verwendet wird. Gleiche Teile sind mit gleichen Bezugsziffern versehen. Die Darstellung der Fig. 4 und 5 entspricht beispielsweise einer stirnseitigen Ansicht der Anordnung der Fig. 1. Dabei ist ersichtlich, dass ein gemeinsames Kulissenelement 6 vorgesehen ist, welches mit dem Kolben 5 gekoppelt ist. Eine Verschiebung des Kolbens führt zu einer Verdrehung des Kulissenelements, so dass dieses gleichzeitig mehrere Zuführkanäle 1 bzw. Luftkanäle 2 hinsichtlich ihres Strömungsquerschnittes regeln bzw. steuern kann.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

### Bezugszeichenliste:

- 1: Zuführkanal
- 2: Luftkanal
- 3: Gegendruckkanal
- 4: Kolben-Zylinder-Einheit
- 5: Kolben
- 6: Kulissenelement
- 7: Brennkammer
- 8: Turbinengehäuse
- 9: Leitschaufel 1. Stufe
- 10: Laufschaufel 1. Stufe
- 11: Scheibe 1. Stufe
- 12: Leitschaufel 2. Stufe
- 13: Laufschaufel 2. Stufe
- 14: Scheibe 2. Stufe
- 15: Turbinenaustrittsleitschaufel
- 16: Feder

## Patentansprüche

1. Gasturbine mit Vorrichtung zur Luftmassenstromregelung mit zumindest einem Zuführkanal (1), welcher in einen Luftkanal (2) mündet, sowie mit einem stromab der Mündung des Zuführkanals (1) von dem Luftkanal (2) abzweigenden Gegendruckkanal (3), sowie mit einem doppelt wirkenden Absperrelement, welches mit dem Gegendruckkanal (3) und dem Zuführkanal (1) verbunden ist und mit Mitteln zur Durchflussregelung in dem Zuführkanal (1) versehen ist
**dadurch gekennzeichnet, dass** die vorrichtung im Turbinengehaüse (8) angeordnet ist, wobei der Luftkanal (2) zur Kühlung der Turbinenleitschaufeln (9) dient und der Gegendruckkanal (3) in den Turbinenbereich zwischen Turbinenleit; und Turbinenlaufschaufeln (9,10) mündet.

2. Gasturbine nach Anspruch 1, **dadurch gekennzeichnet, dass** das Absperrelement eine doppelt wirkende Kolben-Zylinder-Einheit (4) umfasst.

3. Gasturbine nach Anspruch 2, **dadurch gekennzeichnet, dass** der Kolben (5) die Mittel zur Durchflussregelung umfasst.

4. Gasturbine nach Anspruch 3, **dadurch gekennzeichnet, dass** der Kolben (5) als Absperrelement in den Strömungsquerschnitt des Zuführkanals (1) einbringbar ist.

5. Gasturbine nach einem der Ansprüche 1 oder 2, **dadurch gekennzeichnet, dass** die Mittel zur Durchflussregelung ein Kulissenelement umfassen, welches in den Strömungsquerschnitt des Zuführkanals (1) einbringbar ist.

6. Gasturbine nach Anspruch 5, **dadurch gekennzeichnet, dass** mittels des Kulissenelements (6) mehrere Zuführkanäle (1) absperrbar und/oder in ihrem Strömungsquerschnitt regelbar sind.

7. Gasturbine nach einem der Ansprüche 1 bis 6, **dadurch gekennzeichnet, dass** die Mittel zur Durchflussregelung zur gestuften Regelung/Steuerung des Luftmassenstroms ausgebildet sind.

8. Gasturbine nach einem der Ansprüche 1 bis 6, **dadurch gekennzeichnet, dass** die Mittel zur Durchflussregelung zur stufenlosen Regelung/Steuerung des Luftmassenstroms ausgebildet sind.

## Claims

1. Gas turbine with a device for air mass flow control with at least one supply duct (1), which issues into an air duct (2), and with a counter-pressure duct (3), which branches off from the air duct (2) downstream of the mouth of the supply duct (1), and with a double-action shut-off element, which is connected to the counter-pressure duct (3) and the supply duct (1) and is provided with means for flow control in the supply duct (1), **characterized in that** the device is arranged in the turbine casing (8), with the air duct (2) being used for cooling the turbine stator vanes (9) and the counter-pressure duct (3) issuing into the turbine area between turbine stator vanes and rotor blades (9, 10).

2. Gas turbine in accordance with Claim 1, **characterized in that** the shut-off element includes a double-action piston-cylinder unit (4).

3. Gas turbine in accordance with Claim 2, **characterized in that** the piston (5) includes means for flow control.

4. Gas turbine in accordance with Claim 3, **characterized in that** the piston (5) can be provided in the flow area of the supply duct (1) as shut-off element.

5. Gas turbine in accordance with one of the Claims 1 or 2, **characterized in that** the means for flow control include a slider-type element which can be provided in the flow area of the supply duct (1).

6. Gas turbine in accordance with Claim 5, **characterized in that** several supply ducts (1) can be shut off and/or their flow area controlled by means of the slider-type element (6).

7. Gas turbine in accordance with one of the Claims 1 to 6, **characterized in that** the means for flow control are designed for staged control of the air mass flow.

8. Gas turbine in accordance with one of the Claims 1 to 6, **characterized in that** the means for flow control are designed for continuous control of the air mass flow.

## Revendications

1. Turbine à gaz avec dispositif destiné à réguler le flux massique d'air, avec au moins un canal d'alimentation (1) qui débouche dans un canal d'air (2), ainsi qu'avec un canal de contrepression (3) bifurquant du canal d'air (2) en aval de la bouche du canal d'alimentation (1) et avec un élément d'arrêt à double effet relié au canal de contrepression (3) et au canal d'alimentation (1) et est doté de moyens pour réguler le débit dans le canal d'alimentation (1), **caractérisée en ce que** le dispositif est placé dans le carter de turbine (8), sachant que le canal d'air (2) sert à refroidir les aubes fixes (9) de la turbine et que le canal de contrepression (3) débouche dans la zone de turbine comprise entre les aubes fixes et les aubes mobiles (9, 10) de la turbine.

2. Turbine à gaz selon la revendication n° 1, **caractérisée en ce que** l'élément d'arrêt comprend une unité piston-cylindre (4) à double effet.

3. Turbine à gaz selon la revendication n° 2, **caractérisée en ce que** le piston (5) comprend les moyens de régulation du débit.

4. Turbine à gaz selon la revendication n° 3, **caractérisée en ce que** le piston (5) peut être prévu dans la section d'écoulement du canal d'alimentation (1) en tant qu'élément d'arrêt.

5. Turbine à gaz selon une des revendications n° 1 ou n° 2, **caractérisée en ce que** les moyens de régulation du débit comprennent un élément coulissant qui peut être prévu dans la section d'écoulement du canal d'alimentation (1).

6. Turbine à gaz selon la revendication n° 5, **caractérisée en ce qu'**au moyen de l'élément coulissant (6), plusieurs canaux d'alimentation (1) peuvent être obturés et/ou régulés dans leur section d'écoulement.

7. Turbine à gaz selon une des revendications n° 1 à n° 6, **caractérisée en ce que** les moyens de régulation du débit sont conçus pour réguler/contrôler de manière étagée le flux massique d'air.

8. Turbine à gaz selon une des revendications n° 1 à n° 6, **caractérisée en ce que** les moyens de régulation du débit sont conçus pour réguler/contrôler en continu le flux massique d'air.
